# EUROPÄISCHE PATENTANMELDUNG

(11) **EP 1 275 922 A2**
(43) Veröffentlichungstag der Anmeldung: **15.01.2003**
(21) Anmeldenummer: 02015155.1
(22) Anmeldetag: 06.07.2002
(51) Int. Cl.: F26B 25/18, B65G 35/08

(54) **Koppelbare Transferhalter, Verfahren zum Transportieren und/oder Bearbeiten von Sachen und Verwendung von koppelbaren Transferhaltern**

(30) Priorität: 12.07.2001 DE 20111228 U
(71) Anmelder: Motus Engineering GmbH & Co. KG, 35041 Marburg (DE)
(72) Erfinder: Wagner, Alexander, 35037 Marburg (DE); Battenberg, Ralf, 35112 Bellnhausen (DE)
(74) Vertreter: Ackermann, Joachim, Dr.

(57) **Zusammenfassung**

Beschrieben werden koppelbare Transferhalter (11) für den Transport von Sachen (10) umfassend einen Rahmen (12) mit mindestens drei Seitenprofilen, die eine mit den Sachen (10) zu beschickende Fläche umschließen, worin mindestens zwei Seitenprofile jeweils eine Koppelstelle (5, 8) aufweisen, die eine Kopplung von mindestens zwei Transferhaltern (11) gestatten.

Die koppelbaren Transferhaltern lassen sich zum Transport von Sachen, insbesondere bei der automatisierten Be- und Entladung von Anlagen einsetzen.

## Beschreibung

Die vorliegende Erfindung betrifft koppelbare Transferhalter und deren Verwendung in Verfahren zum Transportieren oder zur Bearbeitung von Sachen.

Sachen, wie Behältnisse, Stückgüter oder Produkte, z.B. Feststoffe oder Flüssigkeiten, werden in vielen Stufen der Produktion oder Weiterverarbeitung in größeren, sicher zu fördernden Mengen zusammen gehalten um ein automatisiertes Befördern auch von standunsicheren Behältnissen, Stückgütern oder Produkten zu erreichen. Dies geschieht mittels eines Transferhalters, einer Art Rahmen der um die Behältnisse, Stückgüter oder Produkte gelegt wird oder der als Schale ausgestattet ist, der die beispielsweise in flüssiger oder pastöser Form vorliegenden Produkte aufnimmt.

Insbesondere soll ein Mengentransfer der zu befördernden Sachen in einer wiederholbaren und definierten Geometrie möglich sein. Dies ist nötig um die automatisierte Beförderung der Sachen zu vereinfachen. Insbesondere eignen sich die Transferhalter zur automatisierten Be- und Entladung von Anlagen, die unter sterilen Bedingungen betrieben werden, wie beispielsweise Gefriertrocknungsanlagen, Lagervorrichtungen, Trocknungseinrichtungen in die zur Behandlung unterschiedliche Behältnisse, Stückgüter oder Produkte ein- und ausgebracht werden müssen.

Mehrere Transferhalter sollen beispielsweise durch eine schlitzartige kleine Beladeöffnung mehrfach hintereinander in eine Behandlungsanlage eingefördert und nach Beendigung der Behandlung wieder herausgefördert werden, ohne weit mit Greifern oder ähnlichen Vorrichtungen in die sterile Behandlungsanlage hineinzugreifen. In der Regel sind diese Behandlungsanlagen mit ein oder mehreren regalförmig übereinander angeordneten Stellflächen ausgerüstet.

Diese Transferhalter finden somit speziell Anwendung in der pharma-technischen Sterilproduktion und grundsätzlich in allen industriellen Produktionsbereichen bei denen Behältnisse, Stückgüter oder Produkte auf ebenen Flächen automatisiert kontinuierlich zur Behandlung oder Lagerung aufgebracht und entnommen werden müssen.

Zum Anwendungsgebiet ist aus der deutschen Gebrauchsmusterschrift 89 00750 ist eine Gefriertrocknungseinrichtung bekannt bei welcher Transportrahmen während der Behandlung in der Behandlungsanlage verbleiben. Es ist eine Vielzahl von Transportrahmen notwendig, welche gelagert, sterilisiert und über technisch aufwendige Einrichtungen mit den Behältnissen Be- und Entladen werden müssen. Diese Rahmen sind nicht koppelbar und selbstzentrierend. Mit diesen Rahmen ist keine Automatisierung der Beladung möglich.

Aus der EP-A-99,834 ist ein Be- und Entladesystem mit Rollkästen bekannt. Bei diesem System werden eine Art Rollkästen verwendet in denen die Behältnisse oder das Produkt direkt eingefüllt werden kann. Damit ist keine kontinuierliche Beladung möglich und es bleiben während der Behandlung eine Vielzahl schlecht reinigbarer und sterilisierbarer Transporthilfen (Rollkästen) in der Anlage.

Die Aufgabe der vorliegenden Erfindung besteht in der Gestaltung eines Transferhalters, mit dem die Aufnahme und der Transport einer großen Anzahl von Behältnissen, Stückgütern oder Produkten möglich ist und der sich aufgrund seiner Geometrie und Ausführung dazu eignet, automatisch befördert werden zu können.

Eine weitere Aufgabe der vorliegenden Erfindung besteht in der sicheren und einfachen Einbringung und Austragung von Behältnissen, Stückgütern oder Produkten in bzw. aus Behandlungsanlagen.

Die vorliegende Erfindung betrifft miteinander koppelbare Transferhalter (11) für den Transport von Sachen (10) umfassend einen Rahmen (12) mit mindestens drei, vorzugsweise mindestens vier Seitenprofilen, die eine mit den Sachen (10) zu beschickende Fläche umschließen, worin mindestens zwei Seitenprofile jeweils eine Koppelstelle (5, 8) aufweisen, die eine Kopplung von mindestens zwei Transferhaltern (11) gestatten.

Der Transferhalter ist als Rahmen ausgeführt, damit die Sachen, z.B. die Stückgüter, mit direktem Kontakt zur Wärmeübertragung auf einer Fläche positioniert werden können.

Um lang ausladende Schieber oder Greifervorrichtungen zum Be- oder Entladen einer mit Sachen, wie mit Stückgütern, in Transferhaltern beschickten Behandlungsanlage zu vermeiden, werden die Transferhalter gekoppelt.

Die Transferhalter werden insbesondere in Sterilproduktionsbereichen und in der Lebensmittelindustrie eingesetzt und sind daher gut reinigbar und sterilisierbar zu gestalten. Dieses ist aufgrund der einfachen Rahmenkonstruktion ohne weiteres gegeben.

Vorzugsweise muss eine eindeutige automatische Orientierungserkennung der Rahmen möglich sein, um diese von einem Rahmenformatierer bestücken zu lassen, und in jedem Prozessschritt der Beförderung eindeutig die Position des Transferhalters zu erfassen.

Die Seitenprofile der koppelbaren Transferhalter bilden einen Rahmen (12). Dabei kann es sich um ein beliebiges n-Eck mit n grösser gleich drei, beispielsweise ein Dreieck, ein Sechseck oder vorzugsweise um ein Rechteck handeln.

Das n-Eck ist üblicherweise nach oben und unten offen und bildet die Begrenzung der im Innenraum angeordneten Sachen. Das n-Eck kann aber auch einen durchgehenden Boden (13) aufweisen, so dass dieses mit zu transportierenden bzw. zu bearbeitenden Produkten, wie mit Flüssigkeiten gefüllt werden kann.

Mindestens zwei Seitenprofile des Rahmens (12) weisen jeweils eine Koppelstelle (5, 8) auf. Damit ist eine Kopplung von mindestens zwei erfindungsgemäßen Transferhaltern (11) möglich. Die Koppelstellen können an einander gegenüberliegenden Seiten des Rahmens angebracht sein; es kann aber auch jedes Seitenprofil des Rahmens (12) mindestens eine Koppelstelle aufweisen. Die Transferhalter (11) sind somit auf beliebige Weisen miteinander kombinierbar.

Bei rechteckigen Rahmen (12) können jeweils die Seitenprofile der Vorderlängsseite (4) und der Vorderrückseite (7) Koppelstellen aufweisen. Es können aber auch jeweils nur die Seitenprofile der Querseiten Koppelstellen aufweisen. Oder es können alle Seitenprofile des Rahmens (12) Koppelstellen aufweisen.

Vorzugsweise besitzen jeweils einander gegenüberliegende Seitenprofile Koppelstellen.

Pro Seitenprofil kann eine oder mehrere, z.B. zwei, Koppelstellen vorgesehen sein.

Die Koppelstellen dienen zur Kombination der Transferrahmen, vorzugsweise auch zur Zentrierung dieser Rahmen gegeneinander, so dass eine Anordnung von Transferrahmen entsteht, deren Seiten beim Schieben oder Ziehen sich selbst zentrieren und so die Seiten in einer Flucht liegen.

Die Erfindung betrifft bevorzugt koppelbare Transferhalter mit Seitenprofilen in Form eines Rechtecks, wobei am vorderen Transferhalterprofil (4) mindestens eine Koppelstelle (5) mit einem seitlichen Leitblech (6) angeordnet ist und am hinteren Transferhalterprofil (7) mindestens eine gegensinnig orientierte Koppelstelle (8) mit einer Anfasung (9) angeordnet ist, die das seitliche und vertikale Zentrieren beim Koppeln von zwei Transferhaltern ermöglicht, wobei sich die Koppelstellen (5, 8) im gekoppelten Zustand beim Schieben der Transferhalter genau ineinander legen.

In einer besonders bevorzugten Ausführungsform betrifft die Erfindung koppelbare Transferhalter, bei denen an mindestens einem Transferhalterprofil, vorzugsweise den beiden seitlichen Transferhalterprofilen (1), ein Ausbruch (3) im Profil angeordnet ist, welcher von Sensoren, insbesondere von induktiven oder optischen Sensoren, oder von Schaltern erfasst werden kann.

In einer weiteren besonders bevorzugten Ausführungsform betrifft die Erfindung koppelbare Transferhalter, bei denen mindestens einem der Transferhalterprofile, insbesondere einem der seitlichen Transferhalterprofile (1), ein Ausbruch mit Nase (2) angeordnet ist, welcher eine mechanische Orientierung beim Einschieben des Transferhalters in eine Bestückungs-maschine ermöglicht.

Eine ganz besonders bevorzugte Ausgestaltung der Erfindung betrifft koppel-bare Transferhalter, welche an mindestens zwei der Ecken des Rahmens (12) einen Stift (14) und an mindestens zwei der Ecken des Rahmens (12) eine Öse (15) aufweisen, die eine Kopplung von mindestens zwei Transferhaltern (11) gestatten.

Vorzugsweise befinden sich bei dieser Ausführungsform die Stifte (14) und die Ösen (15) an der Außenseite des Rahmens (12). Es sind aber auch Ausgestaltungen denkbar, bei denen Stifte (14) und Ösen (15) im Innern des Rahmens angeordnet sind.

Die Auswahl der Materialien für die erfindungsgemäßen koppelbaren Transferhalter unterliegen keinen Beschränkungen, solange dadurch der beabsichtigte Verwendungszweck nicht nachteilig beeinflusst wird. Beispiele für Materialien sind Kunststoffe, beispielsweise faserverstärkte Kunststoffe, oder Metalle, die gegebenenfalls oberflächenbehandelt, beispielsweise emailliert sind. Vorzugsweise bestehen die erfindungsgemäßen Transferrahmen aus Blech, z.B. aus Edelstahlblech.

Mit den erfindungsgemäßen Transferrahmen können Sachen in Behandlungsvorrichtungen ein- und ausgetragen werden oder es können Sachen trans-portiert werden. Diese Vorgänge können auf einfache Art und Weise automatisiert werden.

Die Erfindung betrifft auch ein Verfahren zur Behandlung von Sachen, umfassend die Maßnahmen
i) Beschickung eines oben definierten koppelbaren Transferhalters mit Sachen, die behandelt werden sollen,
ii) Ankopplung eines oben definierten leeren koppelbaren Transferhalters an den nach Schritt i) beschickten Transferhalter,
iii) Beschickung des leeren und nach Schritt ii) angekoppelten Transferhalters mit Sachen, die behandelt werden sollen,
iv) gegebenenfalls Wiederholung der Schritte ii) und iii),
v) Transport des gemäß Schritten i) bis iv) hergestellten Verbundes aus miteinander gekoppelten Transferhaltern an einen vorgestimmten Behandlungsort,
vi) Durchführung einer vorbestimmten Behandlung der in den Transferhaltern befindlichen Sachen an dem vorbestimmten Behandlungsort,
vii) Transport des Verbundes mit den gemäß Schritt vi) behandelten Sachen an einen Entladungsort,
viii) Entladung der behandelten Sachen aus einem Transferhalter,
ix) Abkopplung des geleerten Transferhalters nach dem Entladen von den verbliebenen beschickten Transferhaltern, und
x) Wiederholung der Schritte viii) und ix), bis sämtliche Transferhalter entladen und abgekoppelt sind.

Eine weitere Ausgestaltung der Erfindung betrifft ein Verfahren zum Transport von Sachen, umfassend die Maßnahmen
xi) Beschickung eines oben definierten koppelbaren Transferhalters mit Sachen, die transportiert werden sollen,
xii) Ankopplung eines oben definierten leeren koppelbaren Transferhalters an den nach Schritt i) beschickten Transferhalter,
xiii) Beschickung des leeren und nach Schritt xii) angekoppelten Transferhalters mit Sachen, die transportiert werden sollen,
xiv) gegebenenfalls Wiederholung der Schritte xii) und xiii),
xv) Transport des gemäß Schritten xi) bis xiv) hergestellten Verbundes aus miteinander gekoppelten Transferhaltern an einen vorgestimmten Entladungsort,
xvi) Entladung der Sachen aus einem Transferhalter,
xvii) Abkopplung des geleerten Transferhalters nach dem Entladen von den verbliebenen beschickten Transferhaltern, und
xviii) Wiederholung der Schritte xvi) und xvii), bis sämtliche Transferhalter entladen und abgekoppelt sind.

Die erfindungsgemäßen koppelbaren Transferhalter können zum Transport von Sachen, insbesondere bei der automatisierten Be- und Entladung von Anlagen, eingesetzt werden. Die Erfindung betrifft auch die Verwendung für diese Zwecke.

Besonders bevorzugt werden die erfindungsgemäßen Transportrahmen in Anlagen eingesetzt, die unter sterilen Bedingungen betrieben werden. Beispiele dafür sind Gefriertrocknungsanlagen, Lagervorrichtungen oder Trocknungseinrichtungen, in die zur Behandlung unterschiedliche Behältnisse, Stückgüter oder Produkte ein- und ausgebracht werden müssen.

Die Erfindung wird durch die nachfolgend beschriebenen Figuren näher erläutert. Eine Begrenzung der Erfindung ist dadurch nicht beabsichtigt.

In den Figuren werden folgende Bezugszeichen verwendet:

| | |
|---|---|
| (1) Seitliches Transferhalterprofil | (2) Ausbruch mit Nase |
| (3) Ausbruch | (4) Vorderes Transferhalterprofil |
| (5) Vordere Koppelstelle | (6) Seitliches Leitblech |
| (7) Hinteres Transferhalterprofil | (8) Hintere Koppelstelle |
| (9) Anfasung hintere Koppelstelle | (10) Behältnis/ Stückgut |
| (11) Transferhalter | (12) Rahmen |
| (12a) vorderer Seitenrahmen | (12b) Seitenlängsrahmen 1 |
| (12c) hinterer Seitenrahmen | (12d) Seitenlängsrahmen 2 |
| (13) Boden | (14) Stift |
| (15) Öse | |

Es zeigen:
Fig.1: Transferhalter in Gesamtansicht
Fig.2: Transferhalter Koppelstelle an vorderem Transferhalterprofil
Fig.3: Transferhalter Koppelstelle an hinterem Transferhalterprofil mit Aus-bruch im seitlichen Transferhalterprofil
Fig.4: Transferhalter Seitenprofil mit Ausbruch und Nase
Fig.5: Transferhalter in der Seitenansicht, Transferhalter II angehoben
Fig.6: Transferhalter in der Seitenansicht, Einkoppelstellung
Fig.7: Transferhalter in der Seitenansicht, Einkoppelstellung
Fig.8: Transferhalter in der Seitenansicht, Einkoppelstellung
Fig. 9: Transferhalter mit Stiften und Ösen als Koppelstellen

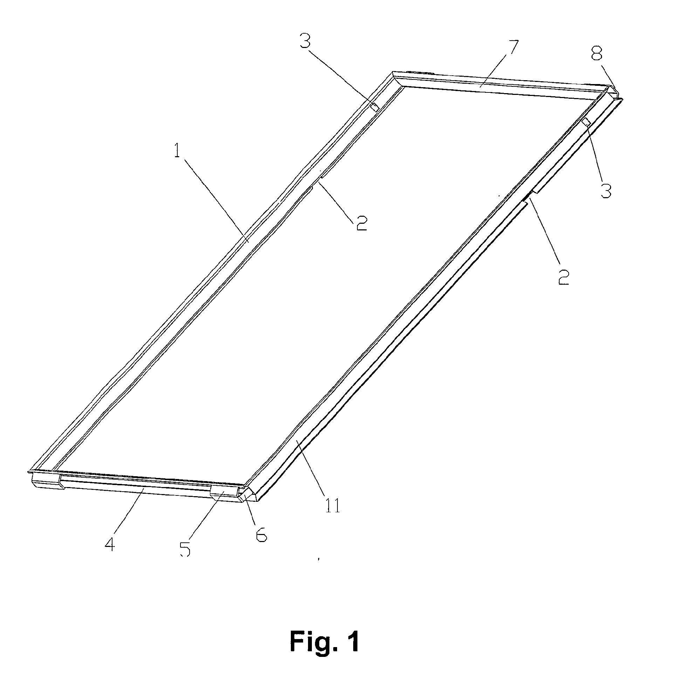

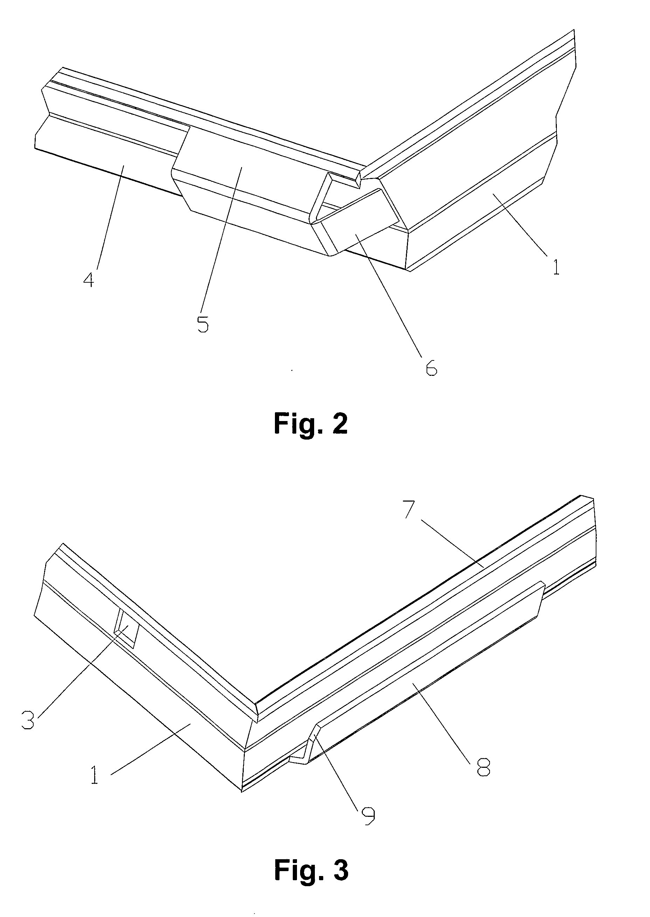

Figuren 1, 2 und 3 zeigen einen erfindungsgemäßen Transferhalter, der als rahmenartiges Gebilde aus Blechprofilen ausgeführt ist, wobei am vorderen Transferhalterprofil (4) ein oder mehrere Koppelstellen (5) mit jeweils einem seitlichen Leitblech (6) angeordnet werden und am hinteren Transferhalterprofil (7) die gleiche Anzahl gegensinnig orientierter Koppelstellen (8) mit einer Anfasung (9) an dieser vorgesehen werden. Hierdurch lassen sich zwei oder mehrere dieser Transferhalter durch eine Vertikalbewegung nach oben, eine anschließende Horizontalbewegung und anschließend Vertikalbewegung nach unten koppeln.

Die Koppelstellen (5, 8) sind so gestaltet dass diese eine seitliche und vertikale Zentrierung der Transferhalter beim Koppeln und anschließenden Schieben über einen Untergrund bestückt mit Behältnissen (10) ermöglichen.

Bestückt wird der Transferhalter von Bestückungsmaschinen die den Halter über eine mit Behältnissen (10) belegte und formatierte Fläche aufsetzen.

Durch die Koppelstellen (5,8) lassen sich gemäß diesem Beispiel zwei oder mehrere dieser Transferhalter durch eine Vertikalbewegung nach oben, eine anschließende Horizontalbewegung und anschließend Vertikalbewegung nach unten koppeln. Beim vertikalen Einkoppeln erfolgt eine seitliche Zentrierung durch das Leitblech (6) und die Anfasung (8).

Die vertikale Zentrierung ist beim Schieben und Ziehen der gekoppelten Transferhalter dadurch sichergestellt, dass sich beide Koppelstellen passgenau ineinander legen. Die Transferhalter lassen sich so in eine Behandlungsanlage hineinschieben und durch die Kopplung sicher herausziehen. Ein Entkoppeln kann beim Herausziehen aus einer Behandlungsanlage dann erfolgen wenn ein Transferhalter vollständig herausgezogen ist und eine Vertikalbewegung möglich ist.

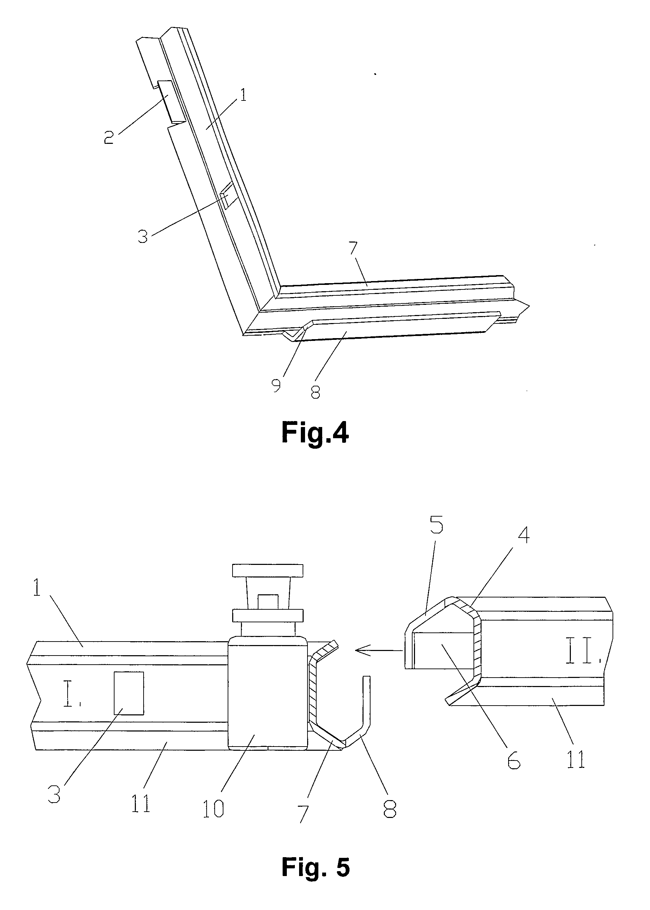

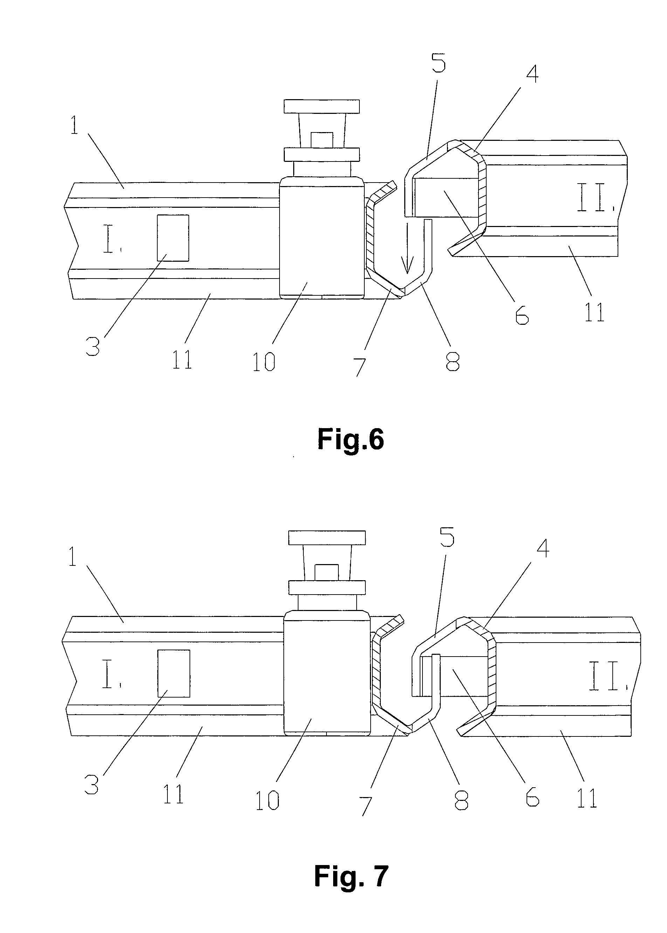

Figuren 5 und 6 zeigen, dass durch das Anordnen von einem oder mehreren Ausbrüchen (3) am seitlichen Transferhalterprofil die Position des Transfer-halters durch Sensoren genau erfasst werden kann. Dies wird benötigt für Positionsabfragen in den automatisierten Förderprozessen.

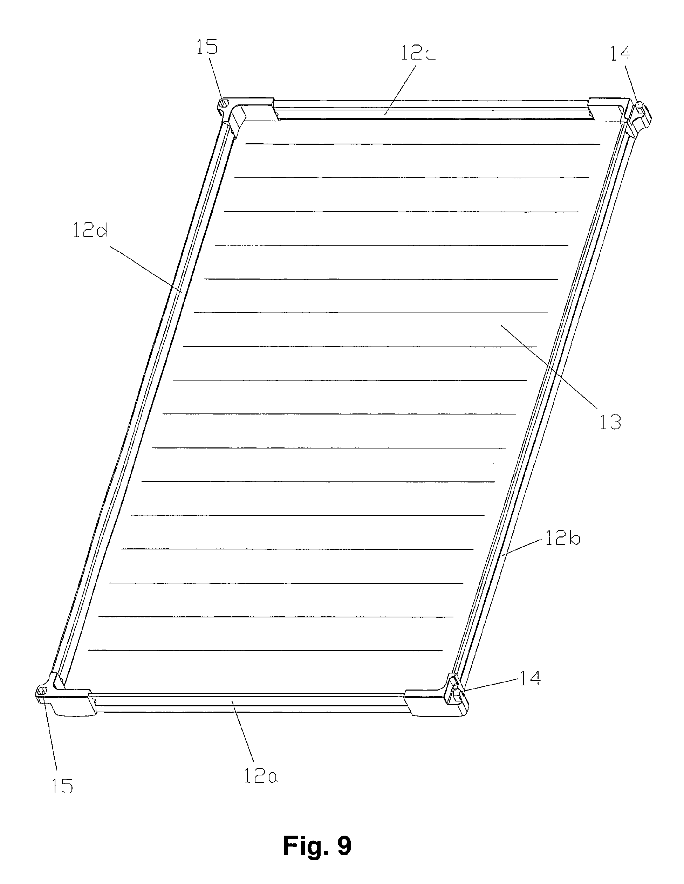

Figuren 5, 6, 7 und 8 zeigen ferner das Ankoppeln zweier Transferhalter I und II. In diesen Figuren ist der Ankoppelvorgang als Folge einer Horizontal- und einer Vertikalbewegung der Transferhalter zueinander beschrieben. Anstelle davon können anders ausgestaltete Transferhalter auch über andere Bewegungsfolgen miteinander gekoppelt werden, beispielsweise durch_Horizontalbewegung oder durch Vertikalbewegung (vergl. Figur 9) zueinander.

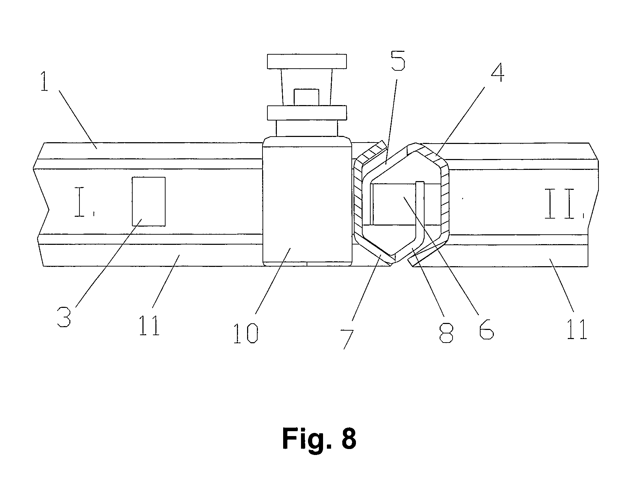

Der besseren Übersichtlichkeit halber sind in den Figuren 5, 6, 7 und 8 vorderes und hinteres Transferhalterprofil (4, 7) geschnitten (gestrichelt) dargestellt. Die vorderen und hinteren Koppelstellen (5, 8) beider Transferhalter werden durch eine Horizontalbewegung in eine Kopplungsposition gebracht, so dass die jeweils zu verbindenden vorderen und hinteren Koppelstellen (5, 8) ineinander greifen können (Figur 5). Die vorderen und hinteren Koppelstellen (5, 8) werden sodann durch vertikale Bewegung ineinander geschoben (Figuren 6 und 7) und dadurch miteinander verbunden. Durch eine weitere horizontale Bewegung werden die Koppelstellen (5, 8) bis an das seitliche Leitblech (6) der vorderen Koppelstelle (5) verschoben (Figur 8). Dadurch wird eine Justierung der Transferhalter (11) ermöglicht.

Durch einen Ausbruch mit Nase (2; Fig. 1 und 4) am seitlichen Transferhalterprofil (1) wird eine eindeutige mechanische Orientierung ermöglicht wenn dieser Transferhalter auf Bestückungsmaschinen aufgegeben wird. Die Aufgabe kann manuell oder automatisch erfolgen. Der Transferhalter wird dann durch eine Blende eingeführt, welche die Nase nur an einer bestimmten Stelle beim Durchschieben zulässt. Durch die Gestaltung des Transferhalters aus offen gekanteten Blechprofilen ist eine gute Reinigung und Sterilisation möglich. Die Reinigungsflüssigkeit und der Reinstdampf kann jede Stelle am Transferhalter zuverlässig erreichen.

In Figur 9 ist ein erfindungsgemäßer Transferhalter (11) in Form eines Rechtecks dargestellt, der mit Stiften (14) und Ösen (15) ausgestattet ist. Darüber ist die Kopplung von mehreren Transferhaltern (11) möglich. Die Koppelstellen befinden sich an den Ecken der Rechtecke und sind am äußeren Umfang der Transferhalter angebracht. In der dargestellten Ausführungsform weisen, die aus dem vorderen Seitenrahmen (12a) und den Seitenlängs-rahmen 1 bzw. 2 (12b, 12d) gebildeten Ecken einen Stift (14) und eine Öse (15) auf und die aus dem hinteren Seitenrahmen (12c) und den Seitenlängs-rahmen 1 bzw. 2 (12b, 12d) gebildeten Ecken weisen ebenfalls einen Stift (14) und eine Öse (15) auf. Es können auch andere Kombinationen zum Einsatz kommen, z.B. Stift (14) und Öse (15) an jeweils einer Ecke eines Transferhalterprofils und am gegenüberliegenden Transferhalterprofil jeweils Öse (15) und Stift (14); oder die Transferhalterprofile weisen mehr als zwei Kopplungsstellen (5 bzw. 8) auf oder es ist jeweils nur eine Kopplungsstelle (5, 8) vorgesehen.

Mit der Erfindung wird erreicht, dass standunsichere Behältnisse, Stückgüter, Flüssigkeiten, Pasten oder sonstige Produkte in einer größeren Menge sicher geometrisch definiert zusammengefasst werden. Sogenannte Rahmen-formatierer stellen die Behältnisse, Stückgüter oder Produkte zusammen und der Transferhalter wird dann um diese Sachen herumgesetzt. Dieser eindeutig geometrisch definierte Transferhalter (Rahmen) kann automatisch befördert werden. Die Koppelstellen ermöglichen ein sicheres seitliches selbstzentrierendes Koppeln der Transferhalter. So können mehrere dieser Transferhalter in eine Behandlungsanlage eingeschoben und herausgezogen werden; hierbei muss ein automatischer Greifer nur den vordersten Transferhalter greifen. Es fahren keine Bauteile weit in eine sterile Behandlungsanlage ein, um die Transferhalter zu greifen und herauszuziehen. Beim Schieben der gekoppelten Transferhalter legen sich die Koppelstellen-profile genau ineinander. Die Transferhalter zentrieren sich also auch vertikal. Durch die seitliche Anordnung von Nasen an einer bestimmten Position des Rahmenprofils wird mechanisch sichergestellt, dass der Rahmen nur in einer bestimmten Orientierung (oben/unten, vorn/hinten) in eine Bestückungsanlage einfahren kann. Dies stellt sicher dass kein Transferhalter unkorrekt bestückt in die weiteren Behandlungsanlagen einfährt und möglicherweise nicht gekoppelt oder durch Sensoren nicht erkannt wird. Durch seitliche Ausbrüche im Transferhalterprofil wird eine Positionskennung der Transferhalter erreicht.

Die Transferhalter sind so gestaltet dass nicht zwischen vorderem Transfer-halter und hinterem angekoppeltem Transferhalter unterschieden werden muss. Das heißt, um eine Behandlungsanlage zu beladen können gleichartige Rahmen verwendet werden. Der Transferhalter ist durch die Profilgeometrie leicht, hat eine geringe zu reinigende Oberfläche und alle Oberflächen sind durch Reinstdampf beim Sterilisieren erreichbar.

## Patentansprüche

1. Koppelbare Transferhalter (11) für den Transport von Sachen (10) umfassend einen Rahmen (12) mit mindestens drei Seitenprofilen, die eine mit den Sachen (10) zu beschickende Fläche umschließen, worin mindestens zwei Seitenprofile jeweils eine Koppelstelle (5, 8) aufweisen, die eine Kopplung von mindestens zwei Transferhaltern (11) gestatten.

2. Koppelbare Transferhalter nach Anspruch 1, **dadurch gekennzeichnet, dass** die Seitenprofile ein Rechteck bilden, das gegebenenfalls mit einem durchgehenden Boden (13) versehen ist.

3. Koppelbare Transferhalter nach Anspruch 1, **dadurch gekennzeichnet, dass** am vorderen Transferhalterprofil (4) mindestens eine Koppelstelle (5) mit einem seitlichen Leitblech (6) angeordnet ist und am hinteren Transferhalterprofil (7) mindestens eine gegensinnig orientierte Koppelstelle (8) mit einer Anfasung (9) angeordnet ist, die das seitliche und vertikale Zentrieren beim Koppeln von zwei Transferhaltern ermöglicht, wobei sich die Koppelstellen (5, 8) im gekoppelten Zustand beim Schieben der Transferhalter genau ineinander legen.

4. Koppelbare Transferhalter nach Anspruch 3, **dadurch gekennzeichnet, dass** an den beiden seitlichen Transferhalterprofilen (1) ein Ausbruch (3) im Profil angeordnet ist, welcher von induktiven oder optischen Sensoren oder Schaltern erfasst werden kann.

5. Koppelbare Transferhalter nach Anspruch 3, **dadurch gekennzeichnet, dass** an mindestens einem der seitlichen Transferhalterprofile (1) ein Ausbruch mit Nase (2) angeordnet ist, welcher eine mechanische Orientierung beim Einschieben des Transferhalters in eine Bestückungs-maschine ermöglicht.

6. Koppelbare Transferhalter nach Anspruch 1, **dadurch gekennzeichnet, dass** an mindestens zwei der Ecken des Rahmens (12) ein Stift (14) und an mindestens zwei der Ecken des Rahmens (12) eine Öse (15) angebracht ist, die eine Kopplung von mindestens zwei Transferhaltern (11) gestatten.

7. Koppelbare Transferhalter nach Anspruch 4, **dadurch gekennzeichnet, dass** sich die Stifte (14) und die Ösen (15) an der Außenseite des Rahmens (12) befinden.

8. Koppelbare Transferhalter nach Anspruch 1, **dadurch gekennzeichnet, dass** die Seitenprofile aus Blech bestehen.

9. Koppelbare Transferhalter nach Anspruch 1, **dadurch gekennzeichnet, dass** die Koppelstellen (5, 8) so angeordnet sind, dass die Einkopplung durch Vertikalbewegung der zu koppelnden Transferhalter (11) erfolgt.

10. Koppelbare Transferhalter nach Anspruch 1, **dadurch gekennzeichnet, dass** die Koppelstellen (5, 8) so angeordnet sind, dass die Einkopplung durch Horizontalbewegung der zu koppelnden Transferhalter (11) erfolgt.

11. Verfahren zur Behandlung von Sachen, umfassend die Maßnahmen
i) Beschickung eines koppelbaren Transferhalters nach Anspruch 1 mit Sachen, die behandelt werden sollen,
ii) Ankopplung eines leeren koppelbaren Transferhalters nach Anspruch 1 an den nach Schritt i) beschickten Transferhalter,
iii) Beschickung des leeren und nach Schritt ii) angekoppelten Transferhalters mit Sachen, die behandelt werden sollen,
iv) gegebenenfalls Wiederholung der Schritte ii) und iii),
v) Transport des gemäß Schritten i) bis iv) hergestellten Verbundes aus miteinander gekoppelten Transferhaltern an einen vorgestimmten Behandlungsort,
vi) Durchführung einer vorbestimmten Behandlung der in den Transferhaltern befindlichen Sachen an dem vorbestimmten Behandlungsort,
vii) Transport des Verbundes mit den gemäß Schritt vi) behandelten Sachen an einen Entladungsort,
viii) Entladung der behandelten Sachen aus einem Transferhalter,
ix) Abkopplung des geleerten Transferhalters nach dem Entladen von den verbliebenen beschickten Transferhaltern, und
x) Wiederholung der Schritte viii) und ix), bis sämtliche Transferhalter entladen und abgekoppelt sind.

12. Verfahren zum Transport von Sachen, umfassend die Maßnahmen
xi) Beschickung eines koppelbaren Transferhalters nach Anspruch 1 mit Sachen, die transportiert werden sollen,
xii) Ankopplung eines leeren koppelbaren Transferhalters nach Anspruch 1 an den nach Schritt xi) beschickten Transferhalter,
xiii) Beschickung des leeren und nach Schritt xii) angekoppelten Transferhalters mit Sachen, die transportiert werden sollen,
xiv) gegebenenfalls Wiederholung der Schritte xii) und xiii),
xv) Transport des gemäß Schritten xi) bis xiv) hergestellten Verbundes aus miteinander gekoppelten Transferhaltern an einen vorgestimmten Entladungsort,
xvi) Entladung der Sachen aus einem Transferhalter,
xvii) Abkopplung des geleerten Transferhalters nach dem Entladen von den verbliebenen beschickten Transferhaltern, und
xviii) Wiederholung der Schritte xvi) und xvii), bis sämtliche Transferhalter entladen und abgekoppelt sind.

13. Verwendung von koppelbaren Transferhaltern nach Anspruch 1 zum Transport von Sachen, insbesondere bei der automatisierten Be- und Entladung von Anlagen.

14. Verwendung nach Anspruch 13, **dadurch gekennzeichnet, dass** die Anlage unter sterilen Bedingungen betrieben wird.

15. Verwendung nach Anspruch 14, **dadurch gekennzeichnet, dass** die Anlage eine Gefriertrocknungsanlage, eine Lagervorrichtung oder eine Trocknungseinrichtung ist, in die zur Behandlung unterschiedliche Behältnisse, Stückgüter oder Produkte ein- und ausgebracht werden müssen.
